# EUROPÄISCHE PATENTANMELDUNG

(11) **EP 2 096 004 A2**
(43) Veröffentlichungstag der Anmeldung: **02.09.2009**
(21) Anmeldenummer: 09100062.0
(22) Anmeldetag: 23.01.2009
(51) Int. Cl.: B60R 21/013

(54) **Verfahren und Steuergerät zur Ansteuerung von Personenschutzmitteln für ein Fahrzeug**

(30) Priorität: 28.02.2008 DE 102008011680
(71) Anmelder: ROBERT BOSCH GMBH, 70442 Stuttgart (DE)
(72) Erfinder: Wieland, Jochen, 70565 Stuttgart (DE)

(57) **Zusammenfassung**

Es wird ein Verfahren und ein Steuergerät zur Ansteuerung von Personenschutzmitteln für ein Fahrzeug in Abhängigkeit von einem erkannten Crashtyp und einer erkannten ersten Crashschwere bei einer Kollision des Fahrzeugs vorgeschlagen. Für mehrere vorgegebene Crashtypen wird jeweils ein eigener Pfad zur Bestimmung einer jeweiligen zweiten Crashschwere verwendet. Die erste Crashschwere wird für die Ansteuerung der Personenschutzmittel in Abhängigkeit von den jeweiligen zweiten Crashschweren bestimmt, indem die jeweiligen Pfade in Abhängigkeit vom erkannten Crashtyp beeinflusst werden.

## Beschreibung

### Stand der Technik

Die Erfindung betrifft ein Verfahren bzw. ein Steuergerät zur Ansteuerung von Personenschutzmitteln für ein Fahrzeug nach der Gattung der unabhängigen Patentansprüche.

Aus DE 103 60 893 A1 ist ein Verfahren zur Ansteuerung von Personenschutzmitteln bekannt, bei dem aus einem Beschleunigungssignal eine Vorverlagerung bestimmt wird, die mit wenigstens einem Schwellwertvergleich verglichen wird, der in Abhängigkeit von einem Geschwindigkeitsabbau und einer Verzögerung zumindest in Fahrzeuglängsrichtung eingestellt wird. In Abhängigkeit von dem Vergleich werden die Personenschutzmittel angesteuert. Der Schwellwert kann dabei in Abhängigkeit von dem Crashtyp oder der Crashschwere angepasst werden.

### Offenbarung der Erfindung

Das erfindungsgemäße Verfahren bzw. das erfindungsgemäße Steuergerät zur Ansteuerung von Personenschutzmitteln mit den Merkmalen der unabhängigen Patentansprüche haben demgegenüber den Vorteil, dass nunmehr verschiedene Crashschweren für verschiedene Crashtypen in jeweiligen Pfaden bestimmt werden. Damit ist die Erkennung des Crashtyps, sowie die Klassifikation der Crashschwere durch die einzelnen Pfade innerhalb eines Crashtyps zeitlich voneinander entkoppelt. Sobald der Crashtyp erkannt wird, gilt die im zugehörigen Crashtyppfad aktuelle Crashschwere als tatsächliche Crashschwere oder beeinflusst zumindest wesentlich die Crashschwere, die zur Ansteuerung der Personenschutzmittel verwendet wird. Der Crashtyp beeinflusst nämlich die jeweiligen Pfade, so dass die Crashschwerebestimmung für jeden Pfad durchgeführt wird, aber sie wird durch den erkannten Crashtyp beeinflusst.

Vorteilhaft ist, dass das erfindungsgemäße Verfahren bzw. das erfindungsgemäße Steuergerät mit einer minimalen Sensorausstattung realisierbar ist. Beispielsweise sind lediglich Beschleunigungssensoren im Steuergerät für die Realisierung der Erfindung notwendig. Auf externe Sensoren, wie die sogenannten Upfront-Sensoren kann dabei verzichtet werden. Dadurch ist das erfindungsgemäße Verfahren bzw. das erfindungsgemäße Steuergerät besonders kostengünstig.

Grundlegend ist, dass der zeitliche Verlauf, beispielsweise der Vorverlagerung, die durch doppelte Integration aus dem Beschleunigungssignal gewonnen werden kann, nur innerhalb eines Crashtyps etwas über die relative Crashschwere ausgesagt werden kann. Bei Crashes verschiedenen Typs jedoch lässt der Vorverlagerungsverlauf keine Rückschlüsse auf die tatsächliche Crashschwere mehr zu. Insbesondere bei Winkel- und Offsetcrashs kann dabei im Vergleich zu einem Flatfrontal-Crash eine Unterschätzung der tatsächlichen Crashschwere stattfinden. Solche Fehleinschätzungen werden erfindungsgemäß vermieden. Ein Flatfrontal-Crash ist ein Frontalzusammenstoß. Ein Winkelcrash ist eine Kollision, bei der das auftreffende Fahrzeug winklig auf das andere Fahrzeug auftrifft. Bei einem Offset-Crash sind die Fahrzeuge gegeneinander versetzt, so dass, wenn die Fahrzeuge aufeinander fahren, diese nur mit einem Teil ihrer Front kollidieren. Mischformen dieser Crashtypen sind möglich, wobei dann sich auf einen dominanten Crashtyp festgelegt werden kann.

Vorliegend bedeutet die Ansteuerung von Personenschutzmitteln wie Airbags oder Gurtstraffern oder crashaktiven Kopfstützen deren Aktivierung.

Bei dem Crashtyp handelt es sich um die Art der Kollision, also beispielsweise um einen Frontalaufprall, um einen Schrägaufprall oder Winkelaufprall und/oder ein Offset-Seiten-/oder Heckaufprall. Andere Crashtypen, die dem Fachmann bekannt sind, sind hierin zu verstehen. Der Crashtyp wird anhand von Sensorsignalen erkannt. Dies können beispielsweise Beschleunigungssignale sein, andere Aufprallsensoren, aber auch Umfeldsensoren wie Radar, Lidar, Video oder Ultraschall. Anhand der Signale kann die Richtung des Aufpralls bestimmt werden und damit der Crashtyp.

Die Crashschwere gibt den Wert an, wie schwerwiegend das Unfallrisiko für den Insassen ist. Daher bestimmt sich die Crashschwere beispielsweise nach der Amplitude des Sensorsignals der Unfallsensorik. Alternativ ist es möglich, eine Signal- oder Unfallenergie auf andere Weise zu bestimmen. Die Kollision bezeichnet dabei einen Aufprall des Fahrzeugs auf ein Objekt wie ein anderes Fahrzeug oder auf einen Baum oder andere Gegenstände, mit denen das Fahrzeug zusammenprallen kann.

Die Architektur des erfindungsgemäßen Verfahrens bzw. des Crashschwerebestimmungsmoduls weist mehrere Pfade für mehrere vorgegebene Crashtypen auf. D. h. es werden nicht notwendigerweise alle möglichen Crashtypen erfasst, sondern beispielsweise nur eine bestimmte Gruppe von Crashtypen, die beispielsweise bei einem Frontalaufprall vorkommen können. Dazu zählen dann beispielsweise der Frontalaufprall, der Winkelaufprall und der Offsetaufprall. Durch die Bestimmung der Crashschwere für jeweilige Crashtypen in unterschiedlichen Pfaden können diese Pfade in Abhängigkeit vom erkannten Crashtyp dann beeinflusst werden. Eine solche Beeinflussung ist, wie in den abhängigen Ansprüchen angegeben, ein Ab- oder Anschalten der jeweiligen Pfade. Die Beeinflussung kann jedoch auch kontinuierlich geschehen, beispielsweise durch Faktoren, mit denen die bestimmte Crashschwere gewichtet wird oder durch Abzüge, die in Abhängigkeit vom erkannten Crashtyp stattfinden können. Die Crashschwere, die dann für die Ansteuerung vorgesehen ist, wird in Abhängigkeit von diesen einzelnen Pfadcrashschweren bestimmt. Die Verknüpfung der Pfadcrashschweren oder zweiten Crashschweren kann auf unterschiedlichster Weise, wie auch in den abhängigen Ansprüchen angegeben, geschehen. Es kann beispielsweise die maximale Crashschwere oder eine Addition der Crashschweren oder eine Mittelwertbildung oder andere Verknüpfungsmechanismen gewählt werden. Die so bestimmte Crashschwere bestimmt dann die Ansteuerung der Personenschutzmittel.

Ein Steuergerät ist vorliegend ein elektrisches Gerät, dass Sensorsignale verarbeitet und in Abhängigkeit davon Steuersignale für die Personenschutzmittel ausgibt.

Die Schnittstelle kann dabei hard- und/oder softwaremäßig ausgebildet sein. Bei einer hardwaremäßigen Ausprägung ist die Schnittstelle beispielsweise Teil eines sogenannten System-ASICs, also eines integrierten Schaltkreises, der verschiedene Funktionen des Steuergeräts beherbergt. Die Schnittstelle kann jedoch auch als eigener Baustein ausgebildet sein. Eine softwaremäßige Ausprägung der Schnittstelle kann beispielsweise auf einem Mikrocontroller als der Auswerteschaltung vorgesehen sein.

Das Unfallsensorsignal stammt von einer Unfallsensorik, die sich innerhalb und/oder außerhalb des Steuergeräts befinden kann. Üblicherweise handelt es sich um eine Beschleunigungssensorik, die in Fahrzeuglängs- und/oder Fahrzeugquerrichtung und/oder in anderen Winkeln angeordnet ist. Aber auch andere Unfallsensoriken sind möglich, wozu eine Luftdrucksensorik, eine Körperschallsensorik und eine Umfeldsensorik gehört, wobei unter einer Umfeldsensorik Radar, Lidar, Ultraschall und/oder Video zu verstehen sind. Auch eine kapazitive Umfeldsensorik kann darunter verstanden werden.

Wie oben bereits angegeben, ist die Auswerteschaltung beispielsweise als ein Mikrocontroller oder ein anderer Prozessor auszubilden. Aber auch andere Möglichkeiten, wie ein ASIC oder ein Aufbau aus diskreten Bauelementen oder Mischformen ist möglich. Auch Mehrkernprozessoren, wie Dual-Core-Prozessoren, sind möglich. Dabei sind das Crashtyperkennungsmodul, das Ansteuerungsmodul, das Crashschwerebestimmungsmodul, das Verknüpfungsmodul und das Beeinflussungsmodul ebenfalls hard- und/oder softwaremäßig ausgebildet. Bei einer hardwaremäßigen Ausprägung handelt es sich dann um getrennte Schaltungsteile, die jedoch auch gemeinsame Teile aufweisen können. Bei einer softwaremäßigen Ausprägung handelt es sich um einzelne Module, die dann softwaretechnisch miteinander verknüpft sind.

Das Ansteuersignal wird dann von einer Ansteuerschaltung, die beispielsweise auch Teil des SystemASICs ist, verarbeitet, um die Personenschutzmittel je nach Gestalt des Ansteuersignals anzusteuern. Das Ansteuersignal kann dabei angeben, welche Personenschutzmittel und wie diese Personenschutzmittel anzusteuern sind.

Durch die in den abhängigen Ansprüchen aufgeführten Maßnahmen und Weiterbildungen sind vorteilhafte Verbesserungen des in den unabhängigen Patentansprüchen angegebenen Verfahrens bzw. Steuergeräts zur Ansteuerung von Personenschutzmitteln für ein Fahrzeug möglich.

Es ist dabei vorteilhaft, dass die jeweiligen Pfade in Abhängigkeit von dem Crashtyp ab- oder angeschaltet werden. D. h. wird ein bestimmter Crashtyp erkannt, dann wird beispielsweise der Pfad, der diesem Cashtyp zugeordnet ist, angeschaltet. Es kann darüber hinaus sein, dass ein Pfad immer durchgeschaltet wird, also nicht beeinflusst wird. Wie oben angegeben, sind auch andere Möglichkeiten der Beeinflussung gegeben. Das An- oder Abschalten bedeutet also die Crashschwere, die für die einzelnen Crashtypen bestimmt wurde, wird letztlich durchgeschaltet.

Eine vorteilhafte Variante der Bestimmung der ersten Crashschwere für die Ansteuerung der Personenschutzmittel ist ein Maximum der Crashschweren, die in den einzelnen Pfaden oder durchgeschalteten Pfaden vorliegen, zu wählen. Dies ist eine besondere, sichere und zuverlässige Methode, um die Personenschutzmittel entsprechend anzusteuern. Alternativen sind bereits oben angegeben, beispielsweise eine Mittelwertbildung, eine Summenbildung usw.

Es ist weiterhin vorteilhaft, dass die Crashschweren in den einzelnen Pfaden dadurch bestimmt werden, dass ein von einem Unfallsensor abgeleitetes Signal in aufeinanderfolgenden Zeitabschnitten mit Schwellen verglichen wird und die jeweiligen Schwellen deren Überschreiten eine jeweilige zweite Crashschwere anzeigt, sich in den aufeinanderfolgenden Zeitabschnitten verändern. Damit wird darauf eingegangen, dass der zeitliche Ablauf eines Unfalls bei der Crashschwerebestimmung berücksichtigt werden muss und nicht nur das absolute aufintegrierte Signal beispielsweise. Aufeinanderfolgend heißt vorliegend, dass die Zeitabschnitte nacheinander kommen, sie müssen sich jedoch nicht nahtlos aneinander anschließen. Es kann Pausen dazwischen geben. Die Zeitabschnitte und die Schwellen sind dann empirisch anhand von Simulationsdaten und/oder Crashversuchen für das jeweilige Fahrzeug festgelegt. Auch eine analytische Festlegung ist denkbar. Die Anzahl der Zeitabschnitte bestimmt die Genauigkeit des erfindungsgemäßen Verfahrens.

Darüber hinaus ist es vorteilhaft, dass die jeweilige Schwelle in den jeweiligen Zeitabschnitten als Stufen oder Kurven verwendet werden. Eine stufige Ausprägung heißt, dass pro Zeitabschnitt eine feste Schwelle, die konstant ist, vorgegeben ist. Alternativ ist es möglich, diese Schwelle auszurechnen und beispielsweise als exponentielle, parabolische oder andere Funktion zu definieren. Es liegt dann als eine Kurve vor. Auch alle anderen Möglichkeiten nach Ausprägen dieser Schwelle sind vorliegend möglich. Schwellen sind dann jeweils auf das jeweilige Fahrzeug, in dem sich das Steuergerät befindet, angepasst.

Des Weiteren ist es vorteilhaft, dass als das Signal ein einfach oder zweifach integriertes Beschleunigungssignal oder eine Signalenergie in Fahrzeuglängs- und/oder -querrichtung verwendet wird. Diese Parameter sind besonders geeignet, die Crashschwere darzustellen. Die Crashschwere ist ein Maß für die Unfallenergie und dies wird durch die aufgezählten Ableitungen des Signals wiedergegeben.

Es ist weiterhin vorteilhaft, dass die Zeitabschnitte unmittelbar, also nahtlos aufeinander folgen. Dann kann lückenlos das Verhalten während dem Aufprall analysiert werden, um die korrekte Crashschwere zu bestimmen.

Weiterhin können die Schwellen vorteilhafter Weise auch durch eine lineare Interpolation festgelegt werden, indem beispielsweise vom Beginn bis zum Ende des jeweiligen Zeitabschnitts eine solche Interpolation folgt. Es kann auch eine nichtlineare Interpolation vorgenommen werden.

Innerhalb der einzelnen Pfade reicht ein einmaliges Überschreiten der Schwelle aus, um die jeweilige Crashschwere zu erkennen. Sie wird innerhalb der Pfade jeweils gehalten und kann nicht mehr nach unten, sondern allenfalls nach oben in Richtung einer höheren Crashschwere korrigiert werden (Maximum-Bildung innerhalb der einzelnen Pfade). Die Maximum-Bildung über alle Pfade kommt noch unabhängig davon hinzu.

Es ist weiterhin vorteilhaft, dass als die vorgegebenen Crashtypen ein Frontalein Winkel und ein Offsetaufprall verwendet werden. Das sind sehr häufige Crashtypen, bei denen Crashschwerebestimmungen unterschieden werden muss, um eine Unterschätzung der Crashschwere zu vermeiden.

Ausführungsbeispiele der Erfindung sind in der Zeichnung dargestellt und werden in der nachfolgenden Beschreibung näher erläutert.

Es zeigen
Figur 1 eine Blockschaltbild des erfindungsgemäßen Steuergeräts im Fahrzeug,
Figur 2 ein Vorverlagerungszeitdiagramm,
Figur 3 ein Blockschaltbild zur Crashschwerebestimmung und Figur 4 ein weiteres Vorverlagerungszeitdiagramm.

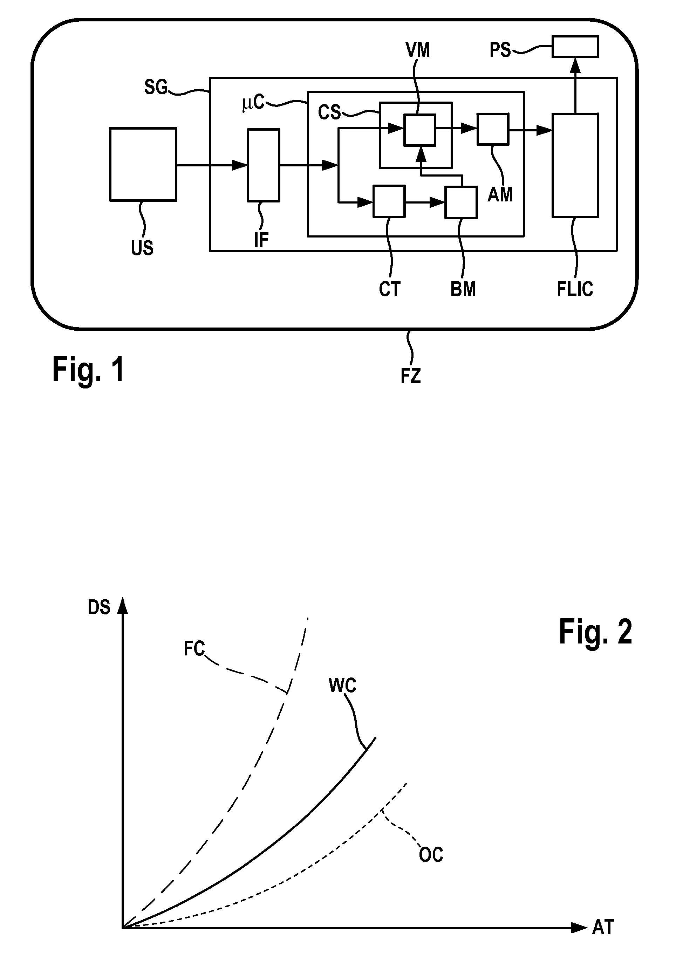

Figur 1 zeigt in einem Blockschaltbild ein erfindungsgemäßes Steuergerät SG in einem Fahrzeug FZ. Vorliegend ist eine Unfallsensorik US an das Steuergerät SG und dabei an eine Schnittstelle IF angeschlossen. Die Unfallsensorik US weist üblicherweise Beschleunigungssensoren, die für die bei den Kollisionen auftretenden Verzögerungen geeignet sind, auf. Darüber hinaus können Körperschallsensoren Luftdrucksensoren in den Seitenteilen des Fahrzeugs und auch eine Umfeldsensorik wie Radar, Lidar oder Ultraschall verwendet werden. Die Übertragung der gegebenenfalls vorverarbeiteten Signale kann über eine Zweidrahtleitung an die Schnittstelle IF erfolgen. Die Zweidrahtleitung kann eine Punkt-zu-Punkt-Verbindung darstellen oder auch eine Busverbindung. Über diese Leitung kann die Energieversorgung der Unfallsensorik US erfolgen. Alternativ sind auch andere leitungsgebundene Übertragungsmedien möglich, wie beispielsweise ein Lichtleiter oder auch eine funkbasierte Übertragung, die dann vorteilhaft das auf eine Leitung und damit auf zusätzliches Gewicht verzichtet werden kann.

Es ist erfindungsgemäß möglich, dass die Unfallsensorik auch oder anstatt im Steuergerät SG selbst angeordnet ist. Eine Anordnung nur im Steuergerät SG ermöglicht eine besonders kostengünstige Realisierung.

Die Schnittstelle IF ist vorliegend Teil eines integrierten Schaltkreises, der als System-ASIC bezeichnet werden kann. Dieser System-ASIC erfüllt verschiedene Funktionen für den Betrieb des Steuergeräts SG, wie beispielsweise die Energieversorgung oder auch die Funktion eines Safety-Controllers, d. h. eines zusätzlichen Hardwarepfads zur Überprüfung der Sensorsignale, um eine Fehlfunktion des Mikrocontrollers µC zu erkennen. Auch Watchdog-Funktionen können hier integriert sein. Die Schnittstelle IF nimmt die Signale der Unfallsensorik US auf und formatiert sie in ein für den Mikrocontroller µC geeignetes Format um, wobei beispielsweise die Übertragung zum Mikrocontroller µC über den sogenannten SPI-(Serial Peripherial Interface) Bus erfolgen kann. Vorliegend werden nur die für das Verständnis der Erfindung notwendigen Komponenten im Steuergerät SG dargestellt. Andere für den Betrieb des Steuergeräts notwendige Komponenten sind der Einfachheit halber weggelassen worden.

Der Mikrocontroller µC nimmt das Signal der Unfallsensoren und führt es einem Crashschwerebestimmungsmodul CS zu und einem Crashtyperkennungsmodul CT. Das Crashtyperkennungsmodul CT bestimmt anhand der Sensorsignale den Crashtyp und überträgt dieses Ergebnis einem Beeinflussungsmodul BM. Dieses Beeinflussungsmodul führt in Abhängigkeit vom erkannten Crashtyp eine Beeinflussung des Crashschwerebestimmungsmoduls CS durch. Dabei erfolgt der Eingriff am Verknüpfungsmodul VM des Crashschweremoduls. Diese Beeinflussung kann beispielsweise in einem Ein- oder Abschalten der jeweiligen Pfade zur Bestimmung der Crashschwere für jeweilige Crashtypen erfolgen. Das crashschwere Bestimmungsmodul CS überträgt dann die so erkannte Crashschwere des vorliegenden Unfalls an ein Ansteuerungsmodul AM, das in Abhängigkeit davon ein Ansteuersignal erzeugt, das beispielsweise ebenfalls über einen SPI-Bus an die Ansteuerschaltung FLIC, die ebenfalls Teil des SystemASICs sein kann, überträgt. Die Ansteuerschaltung FLIC sorgt dann für die Ansteuerung der Personenschutzmittel PS, indem beispielsweise die Zündelemente von Airbags entsprechend bestromt werden. Neben den vorliegend gezeigten Parametern können noch andere Parameter in die Ansteuerungsentscheidung eingehen. Auch andere Algorithmen, die parallel ablaufen, können vorliegend verwendet werden. Die Crashschwere kann auch dazu verwendet werden, in einem Algorithmus eine Schwelle zu beeinflussen.

Figur 2 zeigt ein Vorverlagerungszeitdiagramm, in den die Vorverlagerung für verschiedene Crashtypen dargestellt ist, wobei die Crashschwere die gleiche ist. Die Vorverlagerung ds wird aus einem Beschleunigungssignal durch zweifache Integration bestimmt. Diese Integration ist pragmatisch zu verstehen, d. h. es kann eine doppelte Aufsummierung erfolgen. Auf der Abszisse ist der Algorithmustimer, also die Zeit aufgetragen, die beginnt mit dem Crashbeginn. Der Crashbeginn wird beispielsweise durch Überschreiten einer Rauschschwelle durch das Beschleunigungssignal oder das Geschwindigkeitssignal, also das erste Integral des Beschleunigungssignals, erkannt. Es gibt jedoch auch andere Möglichkeiten, diesen Crashbeginn zu erkennen. Eine solche weitere Möglichkeit den Crashbeginn zu erkennen, ist beispielsweise eine Schwellwertprüfung des tiefpassgefilterten Beschleunigungssignals oder eines Fenster-Integrals, d.h. eine gemittelte Beschleunigung über eine feste Anzahl von Zyklen.

Vorliegend sind die Vorverlagerungskurven in Abhängigkeit von der Zeit für einen Frontalaufprall FC, einen Winkelcrash WC und einen Offsetcrash OC bei 40 km/h angegeben. Man sieht, dass für einen Winkelcrash und einen Offsetcrash eine Unterschätzung der Crashschwere vorliegt. Dies wird erfindungsgemäß vermieden, indem die Crashschwere für die jeweiligen Crashtypen auf einzelnen Pfaden bestimmt wird. Der Frontalcrash weist keinen Offset auf, sondern 100% Überdeckung zwischen Fahrzeug und Kollisionspartner. Es besteht der Winkel 0° zwischen der Fahrzeugfront und dem Kollisionspartner. Bei Winkelcrash liegt ein Winkel von größer 0 zwischen dem Fahrzeug und dem Kollisionspartner vor. Bei einem Offsetcrash ist die Überdeckung zwischen Fahrzeug und Kollisionspartner kleiner 100%.

Wie aus Figur 2 hervorgeht, würde die Crashschwere, die näherungsweise proportional zur Crashgeschwindigkeit ist, sowohl vom Winkel, als auch vom Offsetcrash anhand des Vorverlagerungsverlaufs ds im Vergleich zum Frontalcrash FC stark unterschätzt. Das lässt sich hauptsächlich dadurch erklären, dass sich das Signal ds ausschließlich aus der lateralen Beschleunigung errechnet, so dass auftretende Querbeschleunigungen zwar vorhanden, aber im Signal ds unberücksichtigt bleiben.

Eine Aufteilung der Crashschwereberechnung in mehrere parallele Pfade erlaubt somit eine Klassifizierung dieser Crashschwere, die unabhängig von einer externen Crashtyperkennung ablaufen kann.

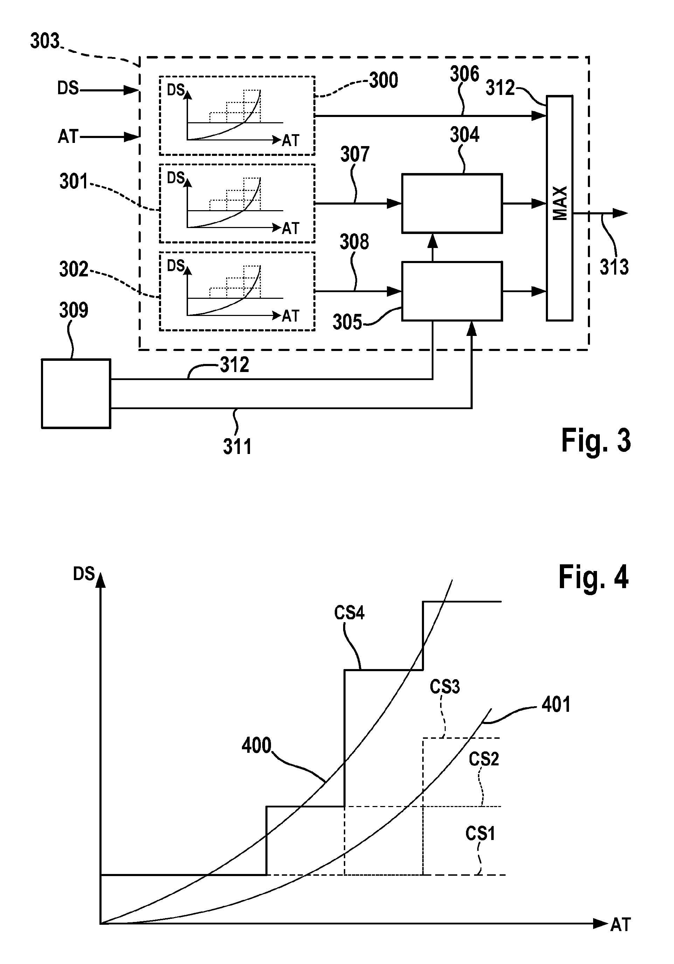

Figur 3 zeigt die Crashschwerebestimmung nach dem erfindungsgemäßen Verfahren. In das Crashschwerebestimmungsmodul 303 gehen als Eingangsparameter die Vorverlagerung DS und der Algorithmustimer ein. Weiterhin gehen als Eingangsparameter der erkannte Crashtyp von der Crashtyperkennung 309 ein.

Das Crashschwerebestimmungsmodul 303 weist vorliegend drei Pfade auf, nämlich für den Frontalcrash 306, für den Winkelcrash 307 und den Offsetcrash 308. Die Crashschwere wird in den Blöcken 300, 301 und 302 dadurch bestimmt, dass das Vorverlagerungssignal DS in Abhängigkeit vom Algorithmustimer mit Schwellen in aufeinanderfolgenden Zeitabschnitten verglichen wird. Das Überschreiten der Schwelle zeigt an, dass die jeweilige Crashschwere überschritten wurde. Diese Crashschwere wird dann über die Pfade 306, 307 und 308 weiter übertragen, und zwar vom Pfad 306 direkt an das Modul zur Verknüpfung 312. Die Pfade 307 und 308 werden durch die Blöcke 304 und 305 jeweils unterbrochen. Der Block 304 wird nur durchgeschaltet, falls der Crashtyp Winkelcrash vorliegt. Sonst wird er nicht durchgeschaltet, so dass diese Crashschwere dann nicht zum Verknüpfungsmodul 312 durchgeschaltet wird.

Für den Pfad 308 läuft es analog. Hier wird der Block 305 nur dann zum Durchschalten der Crashschwere aktiviert, wenn der Crashtyp Offset vorliegt. Nur dann kann die Crashschwere, die im Block 302 bestimmt wurde, zum Verknüpfungsmodul 312 durchdringen.

Es liegen also drei Teilcrashschweren 306, 307 und 308 vor. Je nach dem, welcher Crashtyp von der externen Crashtypunterscheidung 309 erkannt wird, wird die jeweilige Teilcrashschwere durchgeschaltet und fließt so über die Maximumbildung im Verknüpfungsmodul 312 in die resultierende Gesamtschwere 313 ein. Bei dieser Maximumbildung ist die Teilcrashschwere 306 immer aktiv, d. h. die Crashschwere des im Allgemeinen am robustesten applizierten Frontalcrashpfades 306 geht standardmäßig in die Gesamtschwere ein.

Wie bereits innerhalb der einzelnen Crashtyppfade wird auch die im Crash maximal erreichte Crashschwere 313 gehalten, d. h. eine einmal erkannte Crashschwere kann nicht mehr nach unten, sondern allenfalls nach oben korrigiert werden.

Insgesamt können so in Abhängigkeit von der ermittelten Gesamtcrashschwere 313 die jeweils benötigen Personenschutzmittel, wie beispielsweise Gurtstraffer, erste oder zweite Airbagstufe abhängig von weiteren Insasseninformationen, wie z. B. dem Insassengewicht, aktiviert werden.

Wie oben dargestellt, kann das Vorverlagerungssignal durch den Geschwindigkeitsabbau, der durch die einfache Integration des Beschleunigungssignals bestimmt wird, ersetzt werden. Alternativen sind auch die Signalenergie in Fahrzeuglängsrichtung, die beispielsweise durch die Aufsummation des betragsmäßigen Beschleunigungssignals oder die Aufsummation des quadrierten Beschleunigungssignals bestimmt wird. Entsprechend kann dies für die Signalenergie in Fahrzeugquerrichtung erfolgen. Auch die Signalenergie in Fahrzeuglängs- und -querrichtung kann durch Summation dieser Größen erfolgen.

Die Unterteilung der Crashschwereerkennung kann auch nur in zwei Pfade erfolgen.

Figur 4 zeigt nun, wie die Crashschwere beispielhaft bestimmt werden kann. Wiederum wird ein Vorverlagerungszeitdiagramm dargestellt, wobei die Abszimme wieder durch den Algorithmustimer bestimmt wird. Vorliegend werden vier Crashklassen CS1, CS2, CS3 und CS4 verwendet, wobei CS4 die größte Crashschwere und CS1 die kleinste Crashschwere darstellen. Die Kurven 400 und 401 sind Verläufe des Vorverlagerungssignals bei Crashsituationen. Die Schwelle CS4 ist stufig durch die durchgezogenen Linien dargestellt und in vier Zeitabschnitte, die nicht unbedingt gleich lang sein müssen, eingeteilt, wobei die Stufen immer weiter ansteigen, denn im weiteren Crashverlauf muss das Signal einen immer höheren Wert erreichen, um diese Crashschwere repräsentieren zu können. Kurz gestrichelt ebenfalls stufig ist die Crashschwere CS3, gepunktet die Crashschwere CS2 und lang gestrichelt die Crashschwere CS1. Man erkennt, dass die Crashschwere CS1 die geringste Crashschwere ist, die nur die Crashs abfängt, die relativ spät ein gewisses Signal überschreiten. Der Crash 400 ist ein schwerer Crash und erreicht bereits im ersten Zeitabschnitt die Schwelle der schwersten Crashklasse CS4. In allen Zeitabschnitten erreicht der Crashverlauf 400 die jeweiligen Schwellwerte der Crashklasse CS4. Der Crash 401 ist ein minderschwerer Crash und erreicht in jedem Zeitabschnitt die Schwellen der Crashklasse CS3. Wird einmal eine entsprechende Crashklasse erkannt, aber im nächsten Zeitabschnitt wieder unterschritten, dann bleibt dennoch die höhere Crashklasse bestehen. Es ist allenfalls vorgesehen, dass die Crashklasse weiter erhöht werden kann, also zu einem schwereren Crash.

## Patentansprüche

1. Verfahren zur Ansteuerung von Personenschutzmitteln (PS) für ein Fahrzeug (FZ) in Abhängigkeit von einem erkannten Crashtyp (FC, WC, OC) und einer bestimmten ersten Crashschwere (CS1 bis 4) bei einer Kollision des Fahrzeugs (FZ), **dadurch gekennzeichnet, dass** für mehrere vorgegebene Crashtypen (FC, WC, OC) jeweils ein eigener Pfad zur Bestimmung einer jeweiligen zweiten Crashschwere verwendet wird, dass die erste Crashschwere für die Ansteuerung der Personenschutzmittel (PS) in Abhängigkeit von den jeweiligen zweiten Crashschweren bestimmt wird, indem die jeweiligen Pfade in Abhängigkeit vom erkannten Crashtyp beeinflusst werden.

2. Verfahren nach Anspruch 1, **dadurch gekennzeichnet, dass** die jeweiligen Pfade (306, 307, 308) in Abhängigkeit von dem Crashtyp (WC, OC, FC) ab- oder angeschaltet werden.

3. Verfahren nach Anspruch 1 oder 2, **dadurch gekennzeichnet, dass** als die erste Crashschwere ein Maximum der zweiten Crashschweren verwendet wird.

4. Verfahren nach einem der vorhergehenden Ansprüche, **dadurch gekennzeichnet, dass** die jeweilige zweite Crashschwere **dadurch** bestimmt wird, dass ein von einem Unfallsignal abgeleitetes Signal in aufeinanderfolgenden Zeitabschnitten mit Schwellen verglichen wird und die jeweiligen Schwellen, deren Überschreiten eine jeweilige zweite Crashschwere anzeigt, sich in den aufeinanderfolgenden Zeitabschnitten verändern.

5. Verfahren nach Anspruch 4, **dadurch gekennzeichnet, dass** die als die jeweiligen Schwellen in den jeweiligen Zeitabschnitten Stufen oder Kurven verwendet werden.

6. Verfahren nach Anspruch 4 oder 5, **dadurch gekennzeichnet, dass** als das Signal ein einfach oder zweifach integriertes Beschleunigungssignal oder eine Signalenergie in Fahrzeuglängs- und/oder querrichtung verwendet wird.

7. Verfahren nach einem der Ansprüche 4 bis 6, **dadurch gekennzeichnet, dass** die Zeitabschnitte unmittelbar aufeinander folgen.

8. Verfahren nach Anspruch 4, **dadurch gekennzeichnet, dass** die Schwellen durch eine lineare Interpolation festgelegt werden.

9. Verfahren nach einem der vorhergehenden Ansprüche, **dadurch gekennzeichnet, dass** als die vorgegebenen Crashtypen ein Frontal-, ein Winkel- und ein Offsetaufprall verwendet werden.

10. Steuergerät (SG) zur Ansteuerung von Personenschutzmitteln (PS) für ein Fahrzeug (FZ) mit:
- einer Schnittstelle (IF), die ein Unfallsensorsignal bereitstellt
- einer Auswerteschaltung (µC) mit einem Crashtyperkennungsmodul (CT), mit einem Crashschwereerkennungsmodul (CS) und mit einem Ansteuerungsmodul (AM) zur Ansteuerung der Personenschutzmittel (PS) in Abhängigkeit vom erkannten Crashtyp und der bestimmten Crashschwere, **dadurch gekennzeichnet, dass** das Crashschwerebestimmungsmodul (CS) für mehrere vorgegebene Crashtypen (FC, WC, OC) jeweils einen eigenen Pfad (305 bis 307) zur Bestimmung einer jeweiligen zweiten Crashschwere aufweist, dass das Crashschwerebestimmungsmodul (CS) ein Verknüpfungsmodul (VM) zur Bestimmung der ersten Crashschwere in Abhängigkeit von der jeweiligen zweiten Crashschwere aufweist, wobei ein Beeinflussungsmodul (BM) zur Beeinflussung der jeweiligen Pfade in Abhängigkeit vom erkannten Crashtyp vorgesehen ist.
